# EUROPEAN PATENT SPECIFICATION

(11) **EP 3 889 232 B1**
(45) Date of publication and mention of the grant of the patent: **22.11.2023**
(21) Application number: 19889257.2
(22) Date of filing: 21.10.2019
(51) Int. Cl.: C09D 171/00, A47J 36/02, B32B 27/00, B32B 27/34, C09D 177/00, C09D 179/08

(54) **COATING COMPOSITION AND COATED ARTICLE**
BESCHICHTUNGSZUSAMMENSETZUNG UND BESCHICHTETER ARTIKEL
COMPOSITION DE REVÊTEMENT ET ARTICLE REVÊTU

(30) Priority: 26.11.2018 JP 2018220333
(43) Date of publication of application: 06.10.2021
(73) Proprietor: DAIKIN INDUSTRIES, LTD., Osaka-Shi, Osaka 530-0001 (JP)
(72) Inventor: YAMAGUCHI, Seitaro, Osaka-Shi, Osaka 530-8323 (JP); NAKATANI, Yasukazu, Osaka-Shi, Osaka 530-8323 (JP)
(74) Representative: Goddar, Heinz J.
(86) International application number: PCT/JP2019/041269
(87) International publication number: WO 2020/110515

(56) References cited:
- EP-A2- 0 343 282
- WO-A1-2016/147790
- CN-A- 106 280 975
- FR-A1- 2 871 038
- JP-A- H01 278 556
- JP-A- 2002 538 958
- JP-A- 2008 501 501
- US-B1- 6 596 380

## Description

### TECHNICAL FIELD

The present disclosure relates to coating compositions and coated articles.

### BACKGROUND ART

Fluororesins such as polytetrafluoroethylene, tetra fluoroethylene/perfluoro (alkyl vinyl ether) copolymers, and tetra fluoroethylene/hexafluoropropylene copolymers have -low coefficients of friction and are excellent in properties such as non-adhesiveness and heat resistance . Thus, they are widely used for articles such as cooking utensils (e.g. , frying pans and pots) and kitchen supplies .

A suggestion has been made in which a fluororesin layer is formed on a primer layer obtained by applying an undercoating material to a substrate (for example, see
Patent Literature documents 1 and 2) .

Patent Literature 3 discloses a non-stick coating having improved scratch resistance, comprising a first primary coat applied to a metal substrate and coated by at least one fluorocarbon resin-based outer coat, wherein the first primary coat comprises, in percentage of dry matter measured for the total composition, from 9% to 15% by weight of a fluorocarbon resin, from 4% to 5% by weight of a polyamide-imide (PAI) resin, from 0.12% to 1.1% by weight of a polyetheretherketone (PEEK) resin, and the remainder comprising technological additives, and inert fillers, and dispersing media.

Patent Literature 4 discloses an undercoat composition useful in coating a metal substrate with a resin composition, which undercoat composition comprises: (a) at least one selected from a specific polyaryletherketone resin, and a specific polyphenylenesulfide resin, (b) a specific polyarylethersulfone resin and (c) a thermosetting resin.

### CITATION LIST

### Patent Literature

| | |
|---|---|
| Patent Literature 1: | JP 2002-538958 T & US 6596380 B1 |
| Patent Literature 2: | CN 103465574 A |
| Patent Literature 3: | FR 28710381 A1 |
| Patent Literature 4: | EP 0343282 A2 |

### SUMMARY OF INVENTION

### Technical Problem

The present disclosure aims to provide a coating composition that provides a coating film having excellent coating hardness and corrosion resistance. The present disclosure also aims to provide a coated article having excellent coating hardness and corrosion resistance.

### Solution to Problem

The present invention provides a coating composition for cooking utensils or kitchen supplies according to claim 1.

The present invention also provides a coating composition for cooking utensils or kitchen supplies according to claim 2.

The aromatic polyether ketone resin is preferably present in an amount of 0.5 to 15 parts by mass based on 100 parts by mass of the coating composition.

The coating composition is also preferably in a powder state.

The coating composition of any one of claims 1 and 3 preferably substantially contains no fluorine-containing polymer.

In the coating composition, the aromatic polyether ketone resin is preferably at least one selected from the group consisting of a polyether ketone resin, a polyether ether ketone resin, a polyether ketone ketone resin, a polyether ether ketone ketone resin, and a polyether ketone ester resin.

In the coating composition, the heat-resistant resin is preferably at least one selected from the group consisting of a polyamide resin, a polyamide-imide resin, and a polyimide resin.

The present invention also provides coated article for cooking utensils or kitchen supplies according to claim 7.

In the coated article, the aromatic polyether ketone resin in the primer layer (A) is preferably at least one selected from the group consisting of a polyether ketone resin, a polyether ether ketone resin, a polyether ketone ketone resin, a polyether ether ketone ketone resin, and a polyether ketone ester resin.

In the coated article, the heat-resistant resin (a) is preferably at least one selected from the group consisting of a polyamide resin, a polyamide-imide resin, and a polyimide resin.

In the coated article, the heat-resistant resin (c) preferably contains polyethersulfone resin and at least one selected from the group consisting of a polyamide-imide resin and a polyimide resin, and the polyethersulfone resin is preferably present in an amount of 65 to 85% by mass based on a sum of amounts of the polyethersulfone resin, the polyamide-imide resin, and the polyimide resin.

In the coated article, the heat-resistant resin (c) is preferably present in an amount of 15 to 50% by mass based on a sum of solids contents of the heat-resistant resin (c) and the fluorine-containing polymer (b).

In the coated article, the fluorine-containing polymer (b) is preferably at least one selected from the group consisting of a tetra fluoroethylene homopolymer, a modified polytetrafluoroethylene, a tetra fluoroethylene/hexafluoropropylene copolymer, and a tetra fluoroethylene/perfluoro (alkyl vinyl ether) copolymer.

In the coated article, the fluorine-containing polymer (d) is preferably at least one selected from the group consisting of a tetrafluoroethylene homopolymer, a modified polytetrafluoroethylene, a tetra fluoroethylene/hexafluoropropylene copolymer, and a tetra fluoroethylene/perfluoro (alkyl vinyl ether) copolymer.

In the coated article, preferably, the primer layer (A) has a thickness of 5 to 90 µm, the fluorine-containing layer (B) has a thickness of 5 to 30 µm, and the fluorine- containing layer (C) has a thickness of 10 to 90 µm, wherein the thicknesses are measured by a high-frequency thickness gauge.

### Advantageous Effects of Invention

The present invention can provide a coating composition that provides a coating film having excellent coating hardness and corrosion resistance. The present invention can also provide a coated article having excellent coating hardness and corrosion resistance.

### DESCRIPTION OF EMBODIMENTS

The present invention is specifically described hereinbelow.

The present disclosure relates to a coating composition in a powder state for cooking utensils or kitchen supplies, containing: an aromatic polyether ketone resin; and at least one heat-resistant resin selected from the group consisting of a polyamide-based resin and a polyimide-based resin, the aromatic polyether ketone resin and the heat-resistant resin giving a mass ratio (aromatic polyether ketone resin/heat-resistant resin) of 1/99 to 50/50, the coating composition being intended for direct application to a substrate containing a metal or a non-metal inorganic material.

The present invention also relates to a coating composition in a liquid state for cooking utensils or kitchen supplies, containing: an aromatic polyether ketone resin; at least one heat-resistant resin selected from the group consisting of a polyamide-based resin and a polyimide-based resin, and a liquid medium containing water, the aromatic polyether ketone resin and the heat-resistant resin giving a mass ratio (aromatic polyether ketone resin/heat-resistant resin) of 1/99 to 50/50, the coating composition being intended for direct application to a substrate containing a metal or a non-metal inorganic material, the proportion of water in the liquid medium being 50 to 100% by mass, the coating composition substantially containing no fluorine-containing polymer, i.e. that the amount of fluorine-containing polymer (s) is 5.0% by mass or less based on the sum of the amounts of the aromatic polyether ketone resin and the heat-resistant resin.

The coating composition of the present invention can provide a coating film having excellent coating hardness and corrosion resistance.

The coating composition of the present invention can also provide a coating film having excellent adhesiveness to a substrate.

The aromatic polyether ketone resin is a resin including a repeating unit containing an arylene group, an ether group (-O-), and a carbonyl group (-C(=O)-). Examples of the aromatic polyether ketone resin include polyether ketone resin (PEK), polyether ether ketone resin (PEEK), polyether ketone ketone resin (PEKK), polyether ether ketone ketone resin (PEEKK), and polyether ketone ester resin. Any of these aromatic polyether ketone resins may be used alone or in combination of two or more thereof.

The aromatic polyether ketone resin is preferably at least one selected from the group consisting of PEK, PEEK, PEKK, PEEKK, and polyether ketone ester resin, more preferably PEEK.

The heat-resistant resin is at least one selected from the group consisting of a polyamide-based resin and a polyimide-based resin. Examples of the heat-resistant resin include polyamide resin (PA), polyamide-imide resin (PAI), polyimide resin (PI), and polyether imide resin. Any of these heat-resistant resins may be used alone or in combination of two or more thereof.

The heat-resistant resin is preferably at least one selected from the group consisting of PA, PAI, and PI, more preferably at least one selected from the group consisting of PAI and PI, still more preferably PAI.

The PAI is a resin formed of a polymer having an amide bond and an imide bond in the molecular structure. Any PAI may be used, and examples thereof include resins formed of any high molecular weight polymer obtained by any of the following reactions: a reaction between an aromatic diamine having an amide bond in the molecule and an aromatic tetravalent carboxylic acid (e.g., pyromellitic acid); a reaction between an aromatic trivalent carboxylic acid (e.g., trimellitic anhydride) and a diamine (e.g., 4,4-diaminophenyl ether) or a diisocyanate (e.g., diphenylmethane diisocyanate); and a reaction between a dibasic acid having an aromatic imide ring in the molecule and a diamine. For excellent heat resistance, the PAI is preferably one formed of a polymer having an aromatic ring in the main chain.

The PI is a resin formed of a polymer having an imide bond in the molecular structure. Any PI may be used, and examples thereof include resins formed of any high molecular weight polymer obtained by a reaction such as a reaction of an aromatic tetravalent carboxylic anhydride such as pyromellitic anhydride. For excellent heat resistance, the PI is preferably one formed of a polymer having an aromatic ring in the main chain.

In the coating composition of the present invention, the aromatic polyether ketone resin and the heat-resistant resin give a mass ratio (aromatic polyether ketone resin/heat-resistant resin) of 1/99 to 50/50. In order to obtain a coating film having much better coating hardness, corrosion resistance, and adhesiveness to a substrate, the mass ratio is preferably 3/97 to 48/52, more preferably 5/95 to 45/55.

The sum of the amounts of the aromatic polyether ketone resin and the heat-resistant resin is preferably 80 to 100% by mass, more preferably 90 to 100% by mass, based on the solids content of the coating composition of the present disclosure.

The sum of the amounts of the aromatic polyether ketone resin and the heat-resistant resin based on the solids content of the coating composition means the total mass of the aromatic polyether ketone resin and the heat-resistant resin in a residue obtained by applying the coating composition to a substrate, drying the composition at 80°C to 100°C, and sintering the composition at 380°C to 400°C for 45 minutes.

The coating composition of the present invention may be in a liquid state or in a powder state. The coating composition is preferably in a liquid state.

The coating composition in a liquid state contains a liquid medium containing water. The liquid medium preferably contains water and optionally an organic liquid.

The "organic liquid" herein means an organic compound that is in a liquid state at room temperature around 20°C.

In the liquid medium mainly composed of an organic liquid, the aromatic polyether ketone resin and the heat-resistant resin are in the form of particles dispersed in the liquid medium, in the form of a solution dissolved in the liquid medium, or a mixture thereof. The organic liquid may be a conventionally known organic solvent or the like, and may be used alone or in combination of two or more thereof.

The expression "the liquid medium mainly composed of an organic liquid" means that the proportion of the organic liquid is 50 to 100% by mass based on the liquid medium.

When the liquid medium is mainly composed of water, the aromatic polyether ketone resin and the heat-resistant resin are in the form of particles dispersed in the liquid medium.

The expression "the liquid medium is mainly composed of water" means that the proportion of water in the liquid medium is 50 to 100% by mass.

When the coating composition is in a liquid state, particles of the aromatic polyether ketone resin and the heat-resistant resin preferably have an average particle size of 0.01 to 40 um.

When the liquid medium is mainly composed of water, a surfactant may be added in order to allow particles of the aromatic polyether ketone resin and the heat-resistant resin to be stably dispersed. The surfactant may be a conventionally known surfactant. In the coating composition, the organic liquid may be used together with the surfactant in order to allow particles of the aromatic polyether ketone resin and the heat-resistant resin to be stably dispersed.

The coating composition may be an organosol obtainable by the method disclosed in JP S49-17017 B.

The coating composition is preferably in a liquid state for excellent adhesiveness to a substrate. More preferably, the liquid medium is mainly composed of water in terms of environmental issues. The coating composition containing water is a preferred embodiment.

When the coating composition is in a liquid state, the aromatic polyether ketone resin is preferably present in an amount of 0.5 to 15 parts by mass, more preferably 1.0 to 15 parts by mass, still more preferably 1.2 to 10 parts by mass, particularly preferably 1.5 to 5.0 parts by mass, based on 100 parts by mass of the coating composition.

The aromatic polyether ketone resin in an amount within the above range can provide a coating film having better coating hardness, corrosion resistance, and adhesiveness to a substrate.

The coating composition in a powder state is also a preferred embodiment. In this embodiment, no drying step is required, and a thick coated film is easily obtained with a smaller number of coating steps.

When the coating composition is in a powder state, particles of the aromatic polyether ketone resin and the heat-resistant resin preferably have an average particle size of 1 to 50 um.

The coating composition of the present invention may further contain an additive in addition to the aromatic polyether ketone resin and the heat-resistant resin. Any additive may be used, and examples thereof include leveling agents, solid lubricants, precipitation inhibitors, moisture absorbents, surfactants, surface conditioners, thixotropic agents, viscosity modifiers, anti-gelling agents, ultraviolet absorbers, photostabilizers, plasticizers, anti-flooding agents, anti-skinning agents, scratch inhibitors, fungicides, antibiotics, antioxidants, antistatics, silane-coupling agents, and colorants (e.g., iron oxide, titanium dioxide).

The coating composition of the present invention may contain a filler as the additive in order to allow the resulting coated article to have desired properties, improved physical properties, and an increased amount. Examples of the properties and physical properties include strength, durability, weather resistance, flame retardance, and design.

Any filler may be used, and examples thereof include wood powder, quartz sand, carbon black, clay, talc, diamond, fluorinated diamond, corundum, silica stone, boron nitride, boron carbide, silicon carbide, fused alumina, tourmaline, jade, germanium, zirconium oxide, zirconium carbide, chrysoberyl, topaz, beryl, garnet, extender pigment, flat glitter pigment, flaky pigment, glass, glass powder, mica powder, metal powder (e.g., gold, silver, copper, platinum, and stainless steel), various reinforcing materials, various bulking fillers, and conductive fillers.

The additive is preferably contained in an amount of 0.01 to 10.0% by mass, more preferably 0.1 to 5.0% by mass, based on the coating composition.

The coating composition in a liquid state substantially contains no fluorine-containing polymer. The expression "contains substantially no fluorine-containing polymer" means that the amount of fluorine-containing polymer(s) is 5.0% by mass or less based on the sum of the amounts of the aromatic polyether ketone resin and the heat-resistant resin. The coating composition of the present disclosure substantially containing no fluorine-containing polymer can provide a coating film having excellent coating hardness, corrosion resistance, and adhesiveness to a substrate.

The coating composition of the present invention more preferably contains no fluorine-containing polymer.

The coating composition of the present invention is intended for direct application to a substrate containing a metal or a non-metal inorganic material.

Examples of the metal include simple metals such as iron, aluminum, and copper and alloys thereof. An example of the alloy is stainless steel.

Examples of the non-metal inorganic material include enamel, glass, and ceramic.

The substrate is preferably formed from a metal, more preferably formed from aluminum or stainless steel.

The substrate may be subjected to any surface treatment before the use, such as degreasing treatment or surface-roughening treatment, if necessary. The surface-roughening treatment may be performed by any method, and examples thereof include chemical etching with acid or alkali, anodizing (formation of anodic oxide coating), and sandblasting. The surface treatment may be appropriately chosen in accordance with the types of the substrate, the coating composition, or the like, and a preferred example thereof is sandblasting.

The substrate may be subjected to a degreasing treatment in which the substrate alone is heated at 380°C so that impurities such as oil are pyrolyzed and removed before the use. Alternatively, an aluminum substrate which has been subjected to a surface-roughening treatment with an alumina abrasive after the surface treatment may be used.

The coating composition may be applied to the substrate by any method. For the coating composition in a liquid state, examples of the method include spray coating, roll coating, doctor blade coating, dip (immersion) coating, impregnation coating, spin-flow coating, and curtain-flow coating. Preferred is spray coating. For the coating composition in a powder state, examples of the method include electrostatic coating, fluidized bed coating, and roto lining. Preferred is electrostatic coating.

Application of the coating composition may or may not be followed by sintering. When the coating composition is in a liquid state, the application may or may not be followed by drying.

The drying is preferably performed at a temperature of 70°C to 300°C for 5 to 60 minutes. The sintering is preferably performed at a temperature of 260°C to 410°C for 10 to 30 minutes.

When the coating composition is in a liquid state, application of the coating composition to the substrate is preferably followed by drying. Sintering is preferably not performed.

When the coating composition is in a powder state, application of the coating composition to the substrate is preferably followed by sintering.

The coating composition of the present invention is preferably applied under a layer containing a fluorine-containing polymer. Use of the coating composition of the present disclosure for undercoating (primer) of a layer containing a fluorine-containing polymer is a preferred embodiment.

The coating composition of the present invention is used for cooking utensils or kitchen supplies.

Examples of the cooking utensils include frying pans, pressure cookers, pots, grill pots, rice kettles, ovens, electric griddles, bread pans, kitchen knives, and gas table stoves.

Examples of the kitchen supplies include electric dispensing pots, ice trays, molds, and extractor hoods.

The coating composition of the present invention is used at temperatures lower than the softening temperature of the aromatic polyether ketone resin, and is particularly preferably used for rice kettles required to have a coating film having hardness and corrosion resistance.

The coating composition of the present invention may be used for forming a primer layer (A) constituting the later-described coated article of the present disclosure.

The present invention also relates to a coated article for cooking utensils or kitchen supplies, including: a substrate; a primer layer (A) containing an aromatic polyether ketone resin and at least one heat-resistant resin (a) selected from the group consisting of a polyamide-based resin and a polyimide-based resin; a fluorine-containing layer (B) containing a fluorine-containing polymer (b) and a heat-resistant resin (c); and a fluorine-containing layer (C) containing a fluorine-containing polymer (d), the aromatic polyether ketone resin and the heat-resistant resin (a) giving a mass ratio (aromatic polyether ketone resin/heat-resistant resin (a)) of 1/99 to 50/50, the heat-resistant resin (c) being at least one selected from the group consisting of a polyamide-imide resin, a polyimide resin, a polyethersulfone resin, a polyether imide resin, an aromatic polyether ketone resin, an aromatic polyester resin, and a polyarylene sulfide resin, the substrate, the primer layer (A), the fluorine-containing layer (B), and the fluorine-containing layer (C) being stacked in the stated order, the primer layer (A) substantially containing no fluorine-containing polymer, i.e. that the amount of fluorine-containing polymer (s) is 5.0% by mass or less based on the sum of the amounts of the aromatic polyether ketone resin and the heat-resistant resin.

The coated article of the present invention has excellent coating hardness and corrosion resistance.

The coated article of the present invention also has excellent interlayer adhesiveness. In particular, the coated article of the present invention provides excellent adhesiveness between the substrate and the primer layer (A) .

Examples of the material for the substrate include metals such as simple metals including iron, aluminum, and copper and alloys thereof; and non-metal inorganic materials such as enamel, glass, and ceramic. An example of the alloy is stainless steel.

The substrate is preferably formed from a metal, more preferably formed from aluminum or stainless steel.

The primer layer (A) constituting the coated article of the present invention contains an aromatic polyether ketone resin and a specific heat-resistant resin (a) at a specific ratio.

Examples of the aromatic polyether ketone resin constituting the primer layer (A) are the same as the aromatic polyether ketone resins usable for the coating composition of the present disclosure. The aromatic polyether ketone resin is preferably at least one selected from the group consisting of PEK, PEEK, PEKK, PEEKK, and polyether ketone ester resin, more preferably PEEK.

The heat-resistant resin (a) constituting the primer layer (A) is at least one selected from the group consisting of a polyamide-based resin and a polyimide-based resin. Examples of the heat-resistant resin (a) are the same as the heat-resistant resins usable for the coating composition of the present disclosure. The heat-resistant resin (a) is preferably at least one selected from the group consisting of PA, PAI, and PI, more preferably at least one selected from the group consisting of PAI and PI, still more preferably PAI.

In the primer layer (A), the aromatic polyether ketone resin and the heat-resistant resin (a) give a mass ratio (aromatic polyether ketone resin/heat-resistant resin (a)) of 1/99 to 50/50. In order to achieve much better coating hardness, corrosion resistance, and interlayer adhesiveness, the mass ratio is preferably 3/97 to 48/52, more preferably 5/95 to 45/55.

The primer layer (A) may further contain an additive in addition to the aromatic polyether ketone resin and the heat-resistant resin (a). Examples of the additive are the same as the additives usable for the coating composition of the present disclosure.

The additive is preferably contained in an amount of 0.01 to 10.0% by mass, more preferably 0.1 to 5.0% by mass, relative to the total mass of the primer layer (A).

The primer layer (A) substantially contains no fluorine-containing polymer. The expression "substantially contains no fluorine-containing polymer" means that the amount of any fluorine-containing polymer is 5.0% by mass or less based on the sum of the amounts of the aromatic polyether ketone resin and the heat-resistant resin (a). The coated article of the present disclosure containing the primer layer (A) that substantially contains no fluorine-containing polymer has excellent coating hardness, corrosion resistance, and interlayer adhesiveness.

The primer layer (A) more preferably contains no fluorine-containing polymer.

The primer layer (A) preferably has a thickness of 5 to 90 um. Too small a thickness tends to cause pinholes, possibly reducing the corrosion resistance of the coated article. Too large a thickness tends to cause cracks, possibly reducing the water vapor resistance of the coated article. For the primer layer (A) formed from a liquid composition, the upper limit of the thickness is more preferably 60 um, still more preferably 50 um. For the primer layer (A) formed from a powdery composition, the upper limit of the thickness is more preferably 80 um, still more preferably 70 µm.

The fluorine-containing layer (B) constituting the coated article of the present disclosure contains a fluorine-containing polymer (b) and a specific heat-resistant resin (c).

The fluorine-containing polymer (b) constituting the fluorine-containing layer (B) is a polymer that contains a fluorine atom directly bonded to a carbon atom forming a main chain or a side chain. The fluorine-containing polymer (b) may be non-melt-processible or melt-fabricable.

The fluorine-containing polymer (b) is preferably a polymer obtained by polymerizing a fluorine-containing monoethylene-based unsaturated hydrocarbon (I).

The "fluorine-containing monoethylene-based unsaturated hydrocarbon (I) (hereinafter, also referred to as "unsaturated hydrocarbon (I)")" means an unsaturated hydrocarbon containing in the molecule a vinyl group in which one or more or all of the hydrogen atoms is/are replaced by fluorine atom(s).

The unsaturated hydrocarbon (I) may be the one in which one or more or all of hydrogen atoms not being replaced by fluorine atom(s) is/are replaced by at least one selected from the group consisting of a halogen atom other than a fluorine atom such as a chlorine atom and a fluoroalkyl group such as a trifluoromethyl group. Here, the unsaturated hydrocarbon (I) does not include the later-described trifluoroethylene.

The unsaturated hydrocarbon (I) may be any unsaturated hydrocarbon, and examples thereof include tetrafluoroethylene (TFE), hexafluoropropylene (HFP), chlorotrifluoroethylene (CTFE), vinylidene fluoride (VdF), and vinyl fluoride (VF). Any of these may be used alone or in combination of two or more thereof.

The fluorine-containing polymer (b) may be a homopolymer of the unsaturated hydrocarbon (I). Examples of the homopolymer of the unsaturated hydrocarbon (I) include a tetrafluoroethylene homopolymer (TFE homopolymer), polychlorotrifluoroethylene (PCTFE), polyvinylidene fluoride (PVdF), and polyvinyl fluoride (PVF). TFE homopolymers are non-melt-processible.

The fluorine-containing polymer (b) may be a copolymer of the unsaturated hydrocarbon(s) (I). Examples of the copolymer include a copolymer of two or more unsaturated hydrocarbons (I), a copolymer of at least one unsaturated hydrocarbon (I) and an unsaturated compound (II) copolymerizable with the unsaturated hydrocarbon (I).

In the present disclosure, a polymer obtained by polymerizing one or two or more unsaturated hydrocarbons (I) alone may be used as the fluorine-containing polymer (b), while a polymer obtained by polymerizing one or two or more unsaturated compounds (II) alone cannot be used as the fluorine-containing polymer (b). The unsaturated compound (II) is different from the unsaturated hydrocarbon (I) in this point.

The unsaturated compound (II) may be any unsaturated compound, and examples thereof include trifluoroethylene (3FH) and monoethylene-based unsaturated hydrocarbons such as ethylene (Et) and propylene (Pr). Any of these may be used alone or in combination of two or more thereof.

Specific examples of the copolymer of the unsaturated hydrocarbon(s) (I) include, but are not limited to, TFE-based copolymers such as a TFE/HFP copolymer (FEP), a TFE/CTFE copolymer, a TFE/VdF copolymer, a TFE/3FH copolymer, an Et/TFE copolymer (ETFE), and a TFE/Pr copolymer; VdF/HFP copolymers; VdF/TFE/HFP copolymers; Et/CTFE copolymers (ECTFEs); and Et/HFP copolymers.

The "TFE-based copolymer" herein means a copolymer obtained by copolymerizing TFE and one or two or more monomers other than TFE. In the TFE-based copolymer, typically, the proportion of the polymerized unit based on different monomer(s) other than TFE preferably exceeds 1% by mass of the total mass of the polymerized unit based on TFE and the polymerized unit based on the different monomer.

The different monomer other than TFE in the TFE-based copolymer may be the following different monomer (III) copolymerizable with TFE. The different monomer (III) is preferably at least one monomer selected from the group consisting of a compound other than HFP, represented by the following formula:

X(CF₂)ₘOₙCF=CF₂

(wherein X is -H, -Cl, or -F, m is an integer of 1 to 6, and n is an integer of 0 or 1), a compound represented by the following formula:

C₃F₇O[CF(CF₃)CF₂O]ₚ-CF=CF₂

(wherein p is an integer of 1 or 2), and a compound represented by the following formula:

X(CF₂)_{q}CY=CH₂

(wherein X is as defined in the above, Y is -H or -F, and q is an integer of 1 to 6). Any of these may be used alone or in combination of two or more thereof.

An example of a TFE-based copolymer using the different monomer (III) is a TFE/perfluoro(alkyl vinyl ether) (PAVE) copolymer (PFA). The PFA may be a PFA fluorinated by the method disclosed in WO 2002/088227.

The fluorine-containing polymer (b) may also be a modified polytetrafluoroethylene (modified PTFE). The "modified PTFE" herein means one obtained by copolymerizing TFE with a comonomer in a small amount that does not give melt-fabricability to the resulting copolymer. The comonomer may be any comonomer, and examples thereof include HFP and CTFE among the unsaturated hydrocarbons (I), 3FH among the unsaturated compounds (II), and PAVE, perfluoro(alkoxy vinyl ether), and (perfluoroalkyl)ethylene among the different monomers (III). One or two or more comonomers may be used.

The proportion of the polymerized unit based on the comonomer contained in the modified PTFE is preferably 0.001 to 1% by mass of the total mass of the polymerized unit based on TFE and the polymerized unit based on the comonomer, for example. This proportion is particularly suitable when PAVE, perfluoro(alkoxy vinyl ether), or the like is used as the comonomer.

One or two or more kinds of the fluorine-containing polymer (b) may be used. The fluorine-containing polymer (b) may be a mixture of a homopolymer of the unsaturated hydrocarbon (I) and one or two or more copolymers of the unsaturated hydrocarbons (I), or a mixture of two or more copolymers of the unsaturated hydrocarbons (I).

Examples of the mixture include a mixture of a TFE homopolymer and the TFE-based copolymer and a mixture of two or more copolymers belonging to the TFE-based copolymer, such as a mixture of a TFE homopolymer and PFA, a mixture of a TFE homopolymer and FEP, a mixture of a TFE homopolymer, PFA, and FEP, and a mixture of PFA and FEP.

The fluorine-containing polymer (b) may also be obtained by polymerizing a perfluoroalkyl group-containing ethylenic unsaturated monomer (IV) that contains a perfluoroalkyl group (hereinafter, also referred to as an "unsaturated monomer (IV)"). The unsaturated monomer (IV) is a compound represented by the following formula: 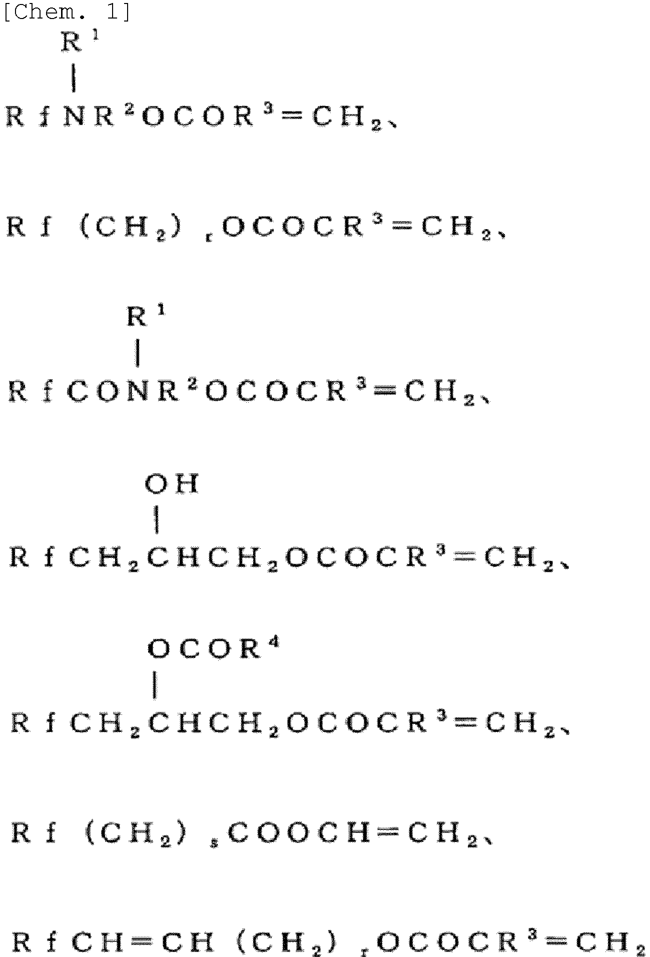 (wherein Rf is a C4-C20 perfluoroalkyl group, R¹ is -H or a C1-C10 alkyl group, R² is a C1-C10 alkylene group, R³ is -H or a methyl group, R⁴ is a C1-C17 alkyl group, r is an integer of 1 to 10, and s is an integer of 0 to 10).

The fluorine-containing polymer (b) may be a homopolymer of the unsaturated monomer (IV) or a copolymer of the unsaturated monomer (IV) and a monomer (V) copolymerizable with the unsaturated monomer (IV).

The monomer (V) may be any monomer, and examples thereof include (meth)acrylic acid derivatives such as cyclohexyl (meth)acrylate, benzyl (meth)acrylate, polyethylene glycol di(meth)acrylate, N-methylol propane acrylamide, amide (meth)acrylate, and an alkyl ester of a (meth)acrylic acid containing a C1-C20 alkyl group; substituted or non-substituted ethylenes such as ethylene, vinyl chloride, vinyl fluoride, styrene, α-methyl styrene, and p-methyl styrene; vinyl ethers such as alkyl vinyl ethers containing a C1-C20 alkyl group and halogenated alkyl vinyl ethers containing a C1-C20 alkyl group; vinyl ketones such as vinyl alkyl ketones containing a C1-C20 alkyl group; aliphatic unsaturated polycarboxylic acids such as maleic anhydride and derivatives thereof; and polyenes such as butadiene, isoprene, and chloroprene.

The fluorine-containing polymer (b) may be obtained by a conventionally known polymerization method such as emulsion polymerization.

In order to provide a coated article having excellent corrosion resistance and water vapor resistance, the fluorine-containing polymer (b) is preferably at least one polymer selected from the group consisting of a TFE homopolymer, a modified PTFE, and a TFE-based copolymer. The TFE-based copolymer is preferably at least one copolymer selected from the group consisting of FEP and PFA.

As described in the above, the fluorine-containing polymer (b) is preferably at least one selected from the group consisting of a TFE homopolymer, a modified PTFE, FEP, and PFA, more preferably at least one selected from the group consisting of a TFE homopolymer, a modified PTFE, and FEP, still more preferably at least one selected from the group consisting of a TFE homopolymer and a modified PTFE .

The heat-resistant resin (c) constituting the fluorine-containing layer (B) is at least one selected from the group consisting of polyamide-imide resin (PAI), polyimide resin (PI), polyethersulfone resin (PES), polyetherimide resin, aromatic polyether ketone resin, aromatic polyester resin, and polyarylene sulfide resin.

PAI and PI are as described in the above.

PES is a resin composed of a polymer containing a repeating unit represented by the following formula:

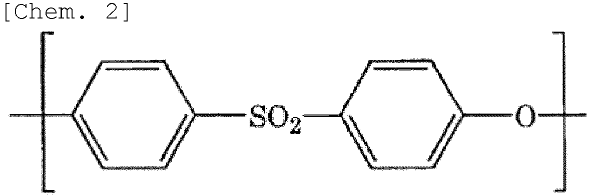

Any PES may be used, and examples thereof include resins composed of any polymer obtained by polycondensation of dichlorodiphenyl sulfone and bisphenol.

The aromatic polyether ketone resin as the heat-resistant resin (c) is a resin containing a repeating unit including an arylene group, an ether group [-O-], and a carbonyl group [-C(=O)-]. Examples of the aromatic polyether ketone resin include polyether ketone resin (PEK), polyether ether ketone resin (PEEK), polyether ketone ketone resin (PEKK), polyether ether ketone ketone resin (PEEKK), and polyether ketone ester resin. Any of these aromatic polyether ketone resins may be used alone or in combination of two or more thereof.

The aromatic polyether ketone resin is preferably at least one selected from the group consisting of PEK, PEEK, PEKK, PEEKK, and polyether ketone ester resin, more preferably PEEK.

The heat-resistant resin (c) is preferably at least one resin selected from the group consisting of PAI, PI, and PES. Thereby, the heat-resistant resin (c) achieves excellent adhesion to the primer layer (A), achieves sufficient heat resistance even at a temperature for sintering for forming cooking utensils or kitchen supplies, and achieves excellent corrosion resistance and water vapor resistance of the resulting cooking utensils or kitchen supplies.

PAI, PI, and PES may each be composed of one kind of polymer or two or more kinds of polymers.

For excellent corrosion resistance, the heat-resistant resin (c) is preferably a mixture of PES and at least one selected from the group consisting of PAI and PI. In other words, the heat-resistant resin (c) may be a mixture of PES and PAI, a mixture of PES and PI, or a mixture of PES, PAI, and PI. The heat-resistant resin (c) is particularly preferably a mixture of PES and PAI.

When the heat-resistant resin (c) is a mixture of PES and at least one selected from the group consisting of PAI and PI, the amount of PES is preferably 65 to 85% by mass of the sum of the amounts of PES and the at least one selected from the group consisting of PAI and PI. The amount thereof is more preferably 70 to 80% by mass.

The heat-resistant resin (c) is preferably contained in an amount of 15 to 50% by mass, more preferably 15 to 40% by mass, still more preferably 15 to 30% by mass, based on the sum of the solids contents of the heat-resistant resin (c) and the fluorine-containing polymer (b).

The expression "the sum of the solids contents of the heat-resistant resin (c) and the fluorine-containing polymer (b)" means the total mass of the heat-resistant resin (c) and the fluorine-containing polymer (b) in a residue obtained by applying an intermediate coating composition (ii) containing the heat-resistant resin (c) and the fluorine-containing polymer (b) to a substrate, drying the composition at 80°C to 100°C, and then sintering the composition at 380°C to 400°C for 45 minutes.

The fluorine-containing layer (B) may contain an additive in addition to the fluorine-containing polymer (b) and the heat-resistant resin (c). Any additive may be usable and the additives exemplified for the coating composition of the present disclosure may be used.

The additive is preferably contained in an amount of 0.01 to 30% by mass, more preferably 0.1 to 20% by mass, based on the total mass of the fluorine-containing layer (B) .

In order to provide a coated article having desired properties, improved physical properties, and an increased amount, the fluorine-containing layer (B) may contain a filler as the additive. Examples of the desired properties and physical properties include strength, durability, weather resistance, flame retardance, and design.

Any filler may be used, and examples thereof include wood powder, quartz sand, carbon black, clay, talc, diamond, fluorinated diamond, corundum, silica stone, boron nitride, boron carbide, silicon carbide, fused alumina, tourmaline, jade, germanium, zirconium oxide, zirconium carbide, chrysoberyl, topaz, beryl, garnet, extender pigment, flat glitter pigment, flaky pigment, glass, glass powder, mica powder, metal powder (e.g., gold, silver, copper, platinum, and stainless steel), various reinforcing materials, various bulking fillers, and conductive fillers.

The amount of the filler is preferably 0.01 to 40% by mass, more preferably 0.05 to 30% by mass, still more preferably 0.1 to 10% by mass, based on the total mass of the fluorine-containing layer (B).

The fluorine-containing layer (B) preferably has a thickness of 5 to 30 um. Too small a thickness may cause insufficient abrasion resistance of the resulting coated article. Too large a thickness may inhibit evaporation of entered moisture from the fluorine-containing layer (B), possibly reducing the water vapor resistance of the coated article. A preferred upper limit of the thickness of the fluorine-containing layer (B) is 20 um.

The fluorine-containing layer (C) contains a fluorine-containing polymer (d).

The fluorine-containing polymer (d) constituting the fluorine-containing layer (C) may be any of the polymers exemplified as the fluorine-containing polymer (b). Preferred among those as the fluorine-containing polymer (d) is preferably at least one selected from the group consisting of a TFE homopolymer, a modified PTFE, FEP, and PFA, more preferred is at least one selected from the group consisting of a TFE homopolymer, a modified PTFE, and PFA, and still more preferred is PFA.

The fluorine-containing layer (C) may contain an additive in addition to the fluorine-containing polymer (c). Any additive may be used, and examples thereof include the additives exemplified for the coating composition of the present disclosure.

The amount of the additive is preferably 0.01 to 30% by mass, more preferably 0.1 to 20% by mass, based on the total mass of the fluorine-containing layer (C).

In order to provide a coated article having desired properties, improved physical properties, and an increased amount, the fluorine-containing layer (C) may contain a filler as the additive. Examples of the desired properties and physical properties include strength, durability, weather resistance, flame retardance, and design. When a glittering filler is used, the coated article of the present disclosure has favorable glitter.

Any filler may be used, and examples thereof include wood powder, quartz sand, carbon black, clay, talc, diamond, fluorinated diamond, corundum, silica stone, boron nitride, boron carbide, silicon carbide, fused alumina, tourmaline, jade, germanium, zirconium oxide, zirconium carbide, chrysoberyl, topaz, beryl, garnet, extender pigment, flat glitter pigment, flaky pigment, glass, glass powder, mica powder, metal powder (e.g., gold, silver, copper, platinum, and stainless steel), various reinforcing materials, various bulking fillers, and conductive fillers. When the fluorine-containing laminate of the present invention is required to have glitter, the filler is preferably a glitter filler. The "glitter filler" is a filler that can give the resulting fluorine-containing laminate glitter.

The filler is preferably contained in an amount of 0.01 to 40% by mass, more preferably 0.05 to 30% by mass, still more preferably 0.1 to 10% by mass, based on the total mass of the fluorine-containing polymer (c).

The fluorine-containing layer (C) preferably has a thickness of 10 to 90 um. Too small a thickness may reduce the corrosion resistance of the coated article. Too large a thickness tends to cause the coated article in the presence of water vapor to have water vapor remained in the coated article, possibly deteriorating the water vapor resistance. A preferred upper limit of the thickness of the fluorine-containing layer (C) formed from a liquid composition is 60 um, more preferably 50 um, particularly preferably 40 um. A preferred upper limit of the thickness of the fluorine-containing layer (C) formed from a powdery composition is 80 um, more preferably 70 um, particularly preferably 60 µm.

In a preferred embodiment of the present disclosure, the primer layer (A) has a thickness of 5 to 90 um, the fluorine-containing layer (B) has a thickness of 5 to 30 um, and the fluorine-containing layer (C) has a thickness of 10 to 90 um.

In the coated article of the present disclosure, the substrate, the primer layer (A), the fluorine-containing layer (B), and the fluorine-containing layer (C) are stacked in the stated order.

In other words, the primer layer (A) is formed on the substrate, the fluorine-containing layer (B) is formed on the primer layer (A), and the fluorine-containing layer (C) is formed on the fluorine-containing layer (B).

The primer layer (A) is preferably in direct contact with the substrate.

The fluorine-containing layer (B) may be in contact with the primer layer (A) directly or with a different layer in between. Still, direct contact is preferred.

The fluorine-containing layer (C) may be in contact with the fluorine-containing layer (B) directly or with a different layer in between. Still, direct contact is preferred.

A still another layer may be formed on the fluorine-containing layer (C). Still, the fluorine-containing layer (C) is preferably an outermost layer.

The primer layer (A) and/or the fluorine-containing layer (B) may have printed matters such as letters or figures on the upper surface.

The coated article of the present disclosure is used for cooking utensils or kitchen supplies.

The cooking utensils and the kitchen supplies are as described in the above. The coated article of the present disclosure is particularly preferably used for rice kettles.

The coated article of the present disclosure is also preferably a cooking utensil, a kitchen supply, or a member thereof, more preferably a rice kettle or a member thereof.

The coated article of the present disclosure can be produced by a method including: a step (1) of forming a primer-coated film (Ap) by applying a primer coating composition (i) to a substrate; a step (2) of forming a coated film (Bp) by applying a fluorine-containing coating material (ii) to the primer-coated film (Ap); a step (3) of forming a coated film (Cp) by applying a fluorine-containing coating material (iii) to the coated film (Bp); and a step (4) of sintering a laminate of the applied films including the primer-coated film (Ap), the coated film (Bp), and the coated film (Cp) and thereby forming a coated article including the substrate, a primer layer (A), a fluorine-containing layer (B), and a fluorine-containing layer (C).

The step (1) is a step of forming a primer-coated film (Ap) by applying a primer coating composition (i) to a substrate.

In the step (1), the primer coating composition (i) preferably contains an aromatic polyether ketone resin and at least one heat-resistant resin (a) selected from the group consisting of a polyamide-based resin and a polyimide-based resin. Moreover, the aromatic polyether ketone resin and the heat-resistant resin (a) preferably give a mass ratio (aromatic polyether ketone resin/heat-resistant resin (a)) of 1/99 to 50/50.

Furthermore, the primer coating composition (i) may optionally contain an additive.

The aromatic polyether ketone resin, the heat-resistant resin (a), and the additive are as described in the above.

The primer coating composition (i) is preferably the above-described coating composition of the present disclosure.

The primer coating composition (i) may be applied to the substrate by any method. For the primer coating composition (i) in a liquid state, examples of the method include spray coating, roll coating, doctor blade coating, dip (immersion) coating, impregnation coating, spin-flow coating, and curtain-flow coating. Preferred among these is spray coating. For the primer coating composition (i) in a powder state, examples of the method include electrostatic coating, fluidized bed coating, and roto lining. Preferred among these is electrostatic coating.

The application of the primer coating composition (i) in the step (1) may or may not be followed by sintering before the step (2). For the primer coating composition (i) in a liquid state, the coating step may or may not be followed by drying.

In the step (1), the drying is preferably performed at 70°C to 300°C for 5 to 60 minutes. The sintering is preferably performed at 260°C to 410°C for 10 to 30 minutes.

In the step (1), the primer coating composition (i) in a liquid state is preferably dried after being applied to the substrate. Sintering is preferably not performed because a laminate of the applied films is sintered in the later-described step (4).

In the step (1), the primer coating composition (i) in a powder state is preferably sintered after being applied to the substrate.

The primer-coated film (Ap) is formed by applying the primer coating composition (i) to the substrate and then optionally drying or sintering the composition. The primer-coated film (Ap) is to serve as the primer layer (A) in the resulting coated article.

The step (2) is a step of forming a coated film (Bp) by applying a fluorine-containing coating material (ii) to the primer-coated film (Ap).

The fluorine-containing coating material (ii) in the step (2) preferably contains the fluorine-containing polymer (b) and at least one heat-resistant resin (c) selected from the group consisting of polyamide-imide resin, polyimide resin, polyethersulfone resin, polyether imide resin, aromatic polyether ketone resin, aromatic polyester resin, and polyarylenesulfide resin.

Furthermore, the fluorine-containing coating material (ii) may optionally contain an additive.

The fluorine-containing polymer (b), the heat-resistant resin (c), and the additive are as described in the above.

The fluorine-containing coating material (ii) may be a powdery coating material or a liquid coating material such as an aqueous coating material. The fluorine-containing coating material (ii) which is a liquid coating material is preferably a liquid coating material in which particles of the fluorine-containing polymer (b) and particles of the heat-resistant resin (c) are dispersed in a liquid medium, more preferably an aqueous coating material in which particles of the fluorine-containing polymer (b) and particles of the heat-resistant resin (c) are dispersed in an aqueous medium mainly containing water.

Particles of the fluorine-containing polymer (b) and particles of the heat-resistant resin (c) in the fluorine-containing coating material (ii) preferably have an average particle size of 0.01 to 40 um in the case of a liquid coating material, or 1 to 50 um in the case of a powdery coating material.

When the fluorine-containing polymer (b) is melt-fabricable, the fluorine-containing coating material (ii) may contain a small amount of PTFE (at least one of a TFE homopolymer or a modified PTFE) in order to fine spherocrystals. In this case, PTFE is preferably contained in an amount of 0.01 to 10.0% by mass based on the fluorine-containing polymer (b).

The fluorine-containing coating material (ii) may be applied to the primer-coated film (Ap) by any method, and examples of the method are the same as the methods of applying the primer coating composition (i). For the fluorine-containing coating material (ii) which is a powdery coating material, preferred is electrostatic coating.

The application of the fluorine-containing coating material (ii) to the substrate in the step (2) may be followed by drying or sintering. The drying or sintering in the step (2) is preferably performed under the same conditions as in the drying or sintering in the step (1).

Sintering is preferably not performed immediately after the fluorine-containing coating material (ii) is applied to the primer-coated film (Ap). This is because all the applied films are to be sintered in the sintering of the laminate of the applied films in the step (4) to be mentioned later.

The coated film (Bp) is formed by applying the fluorine-containing coating material (ii) to the primer-coated film (Ap) and then optionally drying or sintering the material. The coated film (Bp) is to serve as the fluorine-containing layer (B) in the resulting coated article.

The step (3) is a step of forming a coated film (Cp) by applying a fluorine-containing coating material (iii) to the coated film (Bp).

The fluorine-containing coating material (iii) in the step (3) preferably contains the fluorine-containing polymer (d).

Furthermore, the fluorine-containing coating material (iii) may optionally contain an additive.

The fluorine-containing polymer (d) and the additive are as described in the above.

The fluorine-containing coating material (iii) may be a powdery coating material or may be a liquid coating material such as water paint. In order to easily form a thick film with a small number of applying operations and without a drying step, the coating material (iii) is preferably a powdery coating material. When the fluorine-containing coating material (iii) is a liquid coating material, the liquid coating material is preferably a liquid coating material in which particles of the fluorine-containing polymer (d) are dispersed in a liquid medium, more preferably an aqueous coating material in which particles of the fluorine-containing polymer (d) are dispersed in an aqueous medium mainly containing water.

Particles of the fluorine-containing polymer (d) in the fluorine-containing coating material (iii) preferably have an average particle size of 0.01 to 40 um in the case of a liquid coating material, or 1 to 50 um in the case of a powdery coating material.

When the fluorine-containing polymer (d) is melt-fabricable, the fluorine-containing coating material (iii) may contain a small amount of PTFE (at least one of a TFE homopolymer or a modified PTFE) in order to fine spherocrystals. In this case, PTFE is preferably contained in an amount of 0.01 to 10.0% by mass based on the fluorine-containing polymer (d).

The fluorine-containing coating material (iii) preferably contains no coloring pigment. Coloring pigments may cause deterioration in corrosion resistance. Thus, the fluorine-containing coating material (iii) with no coloring pigment can provide a coated article having much better corrosion resistance and water vapor resistance.

The fluorine-containing coating material (iii) may be applied to the coated film (Bp) by any method, and examples of the method are the same as the methods of applying the primer coating composition (i). For the fluorine-containing coating material (iii) which is a powdery coating material, electrostatic coating is preferred.

After the application, the coated film (Cp) may be formed by drying or sintering according to need. The drying or sintering in the step (3) is preferably performed under the same conditions for the drying or sintering in the step (1). The coated film (Cp) is to serve as the fluorine-containing layer (C) of the resulting coated article.

The step (4) is a step of sintering a laminate of the applied films including the primer-coated film (Ap), the coated film (Bp), and the coated film (Cp) and thereby forming a coated article including the substrate, the primer layer (A), the layer (B), and the layer (C).

The sintering in the step (4) is preferably performed under the same conditions for the sintering in the steps (1) to (3) .

The production method may include a step of printing letters, figures, or others after the step (1) of forming the primer-coated film (Ap) and/or the step (2) of forming the coated film (Bp). The letters, figures, or others are, in the case where the coated article is a rice kettle, for example, letters, lines, and others for indicating the amount of water.

The printing may be achieved by any method, and examples of the method include pad-transfer printing. Any printing ink may be used in the printing, and examples thereof include a composition containing PES, a TFE homopolymer, and titanium oxide.

### EXAMPLES

The present invention will be specifically described below referring to, but not limited to, examples. The terms "%" and "part(s)" respectively mean % by mass and part(s) by mass.

### Production Example 1: Preparation of polyether ether ketone aqueous dispersion

In conformity with ASTM D1238, 35 parts of polyether ether ketone, having a melt mass flow rate (MFR) of 36 g/10 min measured at 400°C and at a load of 2.16 kg and an average particle size of 10 um, 4.7 parts of a polyether-based nonionic surfactant, 10 parts of triethylene glycol, 10 parts of propylene glycol, 0.25 parts of 2,4,7,9-tetramethyl-5-decyne-4,7-diol, 0.25 parts of 2-ethyl hexanol, 39.8 parts of deionized water were pulverized with a sand mill for one hour, whereby a PEEK aqueous dispersion having a PEEK concentration of about 35% was obtained.

### Production Example 2: Preparation of polyamide-imide resin aqueous dispersion

Polyamide-imide resin (PAI) varnish (solids content: 29%, containing 71% N-methyl-2-pyrrolidone (NMP)) was put into water, and PAI was precipitated. The precipitated matter was pulverized in a ball mill for 48 hours, whereby a PAI aqueous dispersion was obtained. The resulting PAI aqueous dispersion had a solids content of 20%.

### Production Example 3: Preparation of polyethersulfone resin aqueous dispersion

First, 60 parts of polyethersulfone resin (PES) having a number average molecular weight of about 24000 and 60 parts of deionized water were stirred in a ceramic ball mill for about 10 minutes until PES particles were completely pulverized. Next, 180 parts of NMP was added thereto, and the mixture was pulverized for 48 hours, whereby a dispersion was obtained. The resulting dispersion was further pulverized with a sand mill for one hour, whereby a PES aqueous dispersion having a PES concentration of about 20% was obtained.

### Production Example 4: Preparation of undercoating composition

The PEEK aqueous dispersion obtained in Production Example 1 and the PAI aqueous dispersion obtained in Production Example 2 were mixed such that PEEK was 25% of the sum of the solids contents of PEEK and PAI. Thereto were added methyl cellulose as a thickener in a proportion of 0.5% based on the solids content of the polymers, a polyether-based nonionic surfactant as a dispersion stabilizer in a proportion of 5% based on the solids content of the polymers, an ethoxylated 2,4,7,9-tetramethyl-5-decyne-4,7-diol as a surface conditioner in a proportion of 2.5% based on the solids content of the polymers, whereby an aqueous dispersion having a solids content of 20% was obtained.

### Production Example 5: Preparation of intermediate coating composition

The PES aqueous dispersion obtained in Production Example 3 and the PAI aqueous dispersion obtained in Production Example 2 were mixed such that PES was 75% of the sum of the solids contents of PES and PAI. To the mixture was added a tetrafluoroethylene homopolymer (TFE homopolymer) aqueous dispersion (average particle size: 0.28 um; solids content: 60%; containing, as a dispersant, a polyether-based nonionic surfactant in an amount of 6% based on the TFE homopolymer) such that the total of PES and PAI was 25% of the sum of the solids contents of PES, PAI, and the TFE homopolymer. Then, methyl cellulose in an amount of 0.7% (based on the solids content of the TFE homopolymer) was added as a thickening agent, and a polyether-based nonionic surfactant in an amount of 6% (based on the solids content of the TFE homopolymer) was added as a dispersion stabilizer. Thereby, an aqueous dispersion having a solids content of the polymers of 34% was obtained.

### Production Example 6: Preparation of top coating composition

An aqueous dispersion having a solids content of 46% was obtained by mixing 77.0 parts of a tetrafluoroethylene homopolymer (TFE homopolymer) aqueous dispersion (average particle size: 0.28 um; solids content: 60%; containing, as a dispersant, a polyether-based nonionic surfactant in an amount of 6% (based on the TFE homopolymer)), 4.7 parts of glycerin, 13.4 parts of acrylic resin emulsion (containing butyl acrylate resin, average particle size: 0.3 um; solids content: 40%), 3.9 parts of a polyether-based nonionic surfactant, and 1.0 part of a 25% aqueous solution of sodium lauryl sulfate.

### Example 1

A surface of an aluminum plate (A-1050P) was degreased with acetone, and then roughened by sand-blasting so as to have a surface roughness Ra of 2.5 to 4.0 µm determined in conformity with JIS B 1982. Dusts on the surface were removed by air blowing. The undercoating composition obtained in Production Example 4 was spray-applied using an RG-2 type gravity-feed spray gun (trade name, available from ANEST IWATA Corporation, nozzle diameter 1.0 mm) at a spraying pressure of 0.2 MPa so as to have a dry thickness of about 10 um. The resulting applied film on the aluminum plate was dried at 80°C to 100°C for 15 minutes, and then cooled down to room temperature. The resulting primer-coated film was spray-coated with the intermediate coating composition obtained in Production Example 5 in the same manner as for the undercoating composition, such that the drying thickness was about 10 um. The resulting coated film was dried at 80°C to 100°C for 15 minutes, and then cooled to room temperature. The resulting coated film was spray-coated with the top coating composition obtained in Production Example 6 in the same manner as for the undercoating composition, so as to have a sintered thickness of about 20 um. The resulting coated film was dried at 80°C to 100°C for 15 minutes, sintered at 380°C for 20 minutes, and then cooled, whereby a test coated plate was obtained. The resulting test coated plate included on an aluminum plate an undercoating layer, an intermediate coating layer, and a top coat layer containing

### PTFE .

### Example 2

An undercoating composition was produced as in Production Example 4 except that PEEK accounted for 40% of the sum of the solids contents of PEEK and PAI. A test coated plate was produced as in Example 1 except for using this undercoating composition.

### Example 3

A test coated plate was obtained as in Example 1, except that a PFA powdery coating material (trade name: ACX-34, available from Daikin Industries, Ltd.) as a top coating composition was used for coating by electrostatic coating at a voltage of 40 KV and a pressure of 0.08 MPa, followed by sintering at 380°C for 20 minutes, whereby a top coat layer containing PFA and having a thickness of about 40 um was formed. The resulting test coated plate included on an aluminum plate an undercoating layer, an intermediate coating layer, and a top coat layer containing

### PFA.

### Example 4

A surface of an aluminum plate (A-1050P) was degreased with acetone, and then roughened by sand-blasting so as to have a surface roughness Ra of 2.5 to 4.0 µm determined in conformity with JIS B 1982. Dusts on the surface were removed by air blowing. The surface was coated with a powdery coating material in which polyether ether ketone powder (average particle size 30 um) was added to polyamide imide powder (average particle size 34 µm) such that polyether ether ketone powder was 25% of the sum of the amounts of polyamide imide and polyether ether ketone to a sintered thickness of 60 um by electrostatic coating at a voltage of 60 KV and a pressure of 0.08 MPa. The workpiece was sintered at 380°C for 20 minutes and then cooled, whereby a coated plate including an undercoating film was formed. Intermediate coating and top coating were performed as in Example 1. The resulting test coated plate included on an aluminum plate an undercoating layer, an intermediate coating layer, and a top coat layer containing

### PTFE .

### (Evaluation method)

The coating film of each test coated plate was subjected to the following measurement and evaluated. The results are shown in Table 1.

### Thickness

The thickness was measured with a high-frequency thickness gauge (trade name: LZ-300C, available from Kett Electric Laboratory).

### Corrosion resistance test

The test coated plate was immersed in a solution in which 200 g of sodium chloride was dissolved in 800 g of water, and the solution was kept at 98°C for 300 hours. Then, occurrence of abnormality such as blisters was visually checked. The case without abnormality such as blisters was deemed to be passed, while the case with abnormality such as blisters was deemed to be failed.

### Pencil hardness test

In conformity with JIS K 5400-8.4.1, using a pencil scratch hardness tester (available from Yasuda Seiki Seisakusho, Ltd.), the hardness at which the coating film was broken and the substrate was exposed was determined at room temperature.

### Comparative Example 1

An undercoating composition was produced as in Production Example 4, except that PEEK accounted for 75% of the sum of the solids contents of PEEK and PAI. A test coated plate was produced as in Example 1, except that this undercoating composition was used. The obtained test coated plate was subjected to measurement and evaluated as in Example 1. The results are shown in Table 1.

### Comparative Example 2

An undercoating composition was produced as in Production Example 4, except that PEEK accounted for 100% of the sum of the solids contents of PEEK and PAI. A test coated plate was produced as in Example 1, except that this undercoating composition was used. The obtained test coated plate was subjected to measurement and evaluated as in Example 1. The results are shown in Table 1.

**[Table 1]**

| | Example 1 | Example 2 | Example 3 | Example 4 | Comparative Example 1 | Comparative Example 2 |
|---|---|---|---|---|---|---|
| Undercoating | PEEK/PAI = 25/75 (Aqueous coating material | PEEK/PAI = 40/60 (Aqueous coating material) | PEEK/PAI = 25/75 (Aqueous coating material) | PEEK/PAI = 25/75 (Powder coating material) | PEEK/PAI = 75/25 (Aqueous coating material) | PEEK/PAI = 100/0 (Aqueous coating material) |
| Thickness (pm) | 10 | 10 | 10 | 60 | 10 | 10 |
| Intermediate coating | PAI/PES/PTFE = 6.25/18.75/75 | PAI/PES/PTFE = 6.25/18.75/75 | PAI/PES/PTFE = 6.25/18.75/75 | PAI/PES/PTFE = 6.25/18.75/75 | PAI/PES/PTFE = 6.25/18.75/75 | PAI/PES/PTFE = 6.25/18.75/75 |
| Thickness 10 µm | (Aqueous coating material) | (Aqueous coating material) | (Aqueous coating material) | (Aqueous coating material) | (Aqueous coating material) | (Aqueous coating material) |
| Top coating | PTFE (Aqueous coating material) | PTFE (Aqueous coating material) | PFA (Powder coating material) | PTFE (Aqueous coating material) | PTFE (Aqueous coating material) | PTFE (Aqueous coating material) |
| Thickness (pm) | 20 | 20 | 40 | 20 | 20 | 20 |
| Pencil hardness | 9H or higher | 9H or higher | 9H or higher | 9H or higher | B | 3B |
| Corrosion resistance | Passed | Passed | Passed | Passed | Failed | Failed |

## Claims

1. A coating composition in a powder state for cooking utensils or kitchen supplies, comprising:
an aromatic polyether ketone resin; and
at least one heat-resistant resin selected from the group consisting of a polyamide-based resin and a polyimide-based resin,
the aromatic polyether ketone resin and the heat-resistant resin giving a mass ratio (aromatic polyether ketone resin/heat-resistant resin) of 1/99 to 50/50,
the coating composition being intended for direct application to a substrate containing a metal or a non-metal inorganic material.

2. A coating composition in a liquid state for cooking utensils or kitchen supplies, comprising:
an aromatic polyether ketone resin;
at least one heat-resistant resin selected from the group consisting of a polyamide-based resin and a polyimide-based resin; and
a liquid medium containing water,
the aromatic polyether ketone resin and the heat-resistant resin giving a mass ratio (aromatic polyether ketone resin/heat-resistant resin) of 1/99 to 50/50,
the coating composition being intended for direct application to a substrate containing a metal or a non-metal inorganic material, the proportion of water in the liquid medium being 50 to 100% by mass,
wherein the coating composition substantially contains no fluorine-containing polymer, i.e. that the amount of fluorine-containing polymer (s) is 5.0% by mass or less based on the sum of the amounts of the aromatic polyether ketone resin and the heat-resistant resin.

3. The coating composition according to claim 1 or 2, wherein the aromatic polyether ketone resin is present in an amount of 0.5 to 15 parts by mass based on 100 parts by mass of the coating composition.

4. The coating composition according to any one of claims 1 and 3, substantially containing no fluorine-containing polymer, i.e. that the amount of fluorine-containing polymer (s) is 5.0% by mass or less based on the sum of the amounts of the aromatic polyether ketone resin and the heat-resistant resin.

5. The coating composition according to any one of claims 1 to 4,
wherein the aromatic polyether ketone resin is at least one selected from the group consisting of a polyether ketone resin, a polyether ether ketone resin, a polyether ketone ketone resin, a polyether ether ketone ketone resin, and a polyether ketone ester resin.

6. The coating composition according to any one of claims 1 to 5,
wherein the heat-resistant resin is at least one selected from the group consisting of a polyamide resin, a polyamide-imide resin, and a polyimide resin.

7. A coated article for cooking utensils or kitchen supplies, comprising:
a substrate;
a primer layer (A) containing an aromatic polyether ketone resin and at least one heat-resistant resin (a) selected from the group consisting of a polyamide-based resin and a polyimide-based resin;
a fluorine-containing layer (B) containing a fluorine-containing polymer (b) and a heat-resistant resin (c); and
a fluorine-containing layer (C) containing a fluorine-containing polymer (d),
the aromatic polyether ketone resin and the heat-resistant resin (a) giving a mass ratio (aromatic polyether ketone resin/heat-resistant resin (a)) of 1/99 to 50/50,
the heat-resistant resin (c) being at least one selected from the group consisting of a polyamide-imide resin, a polyimide resin, a polyethersulfone resin, a polyether imide resin, an aromatic polyether ketone resin, an aromatic polyester resin, and a polyarylene sulfide resin,
the substrate, the primer layer (A), the fluorine-containing layer (B), and the fluorine-containing layer (C) being stacked in the stated order,
wherein the primer layer (A) substantially contains no fluorine-containing polymer, i.e. that the amount of fluorine-containing polymer (s) is 5.0% by mass or less based on the sum of the amounts of the aromatic polyether ketone resin and the heat-resistant resin.

8. The coated article according to claim 7,
wherein the aromatic polyether ketone resin in the primer layer (A) is at least one selected from the group consisting of a polyether ketone resin, a polyether ether ketone resin, a polyether ketone ketone resin, a polyether ether ketone ketone resin, and a polyether ketone ester resin.

9. The coated article according to claim 7 or 8,
wherein the heat-resistant resin (a) is at least one selected from the group consisting of a polyamide resin, a polyamide-imide resin, and a polyimide resin.

10. The coated article according to any one of claims 7 to 9,
wherein the heat-resistant resin (c) contains polyethersulfone resin and at least one selected from the group consisting of a polyamide-imide resin and a polyimide resin, and
the polyethersulfone resin is present in an amount of 65 to 85% by mass based on a sum of amounts of the polyethersulfone resin, the polyamide-imide resin, and the polyimide resin.

11. The coated article according to any one of claims 7 to 10, wherein the heat-resistant resin (c) is present in an amount of 15 to 50% by mass based on a sum of solids contents of the heat-resistant resin (c) and the fluorine-containing polymer (b).

12. The coated article according to any one of claims 7 to 11, wherein the fluorine-containing polymer (b) is at least one selected from the group consisting of a tetrafluoroethylene homopolymer, a modified polytetrafluoroethylene, a tetrafluoroethylene/hexafluoropropylene copolymer, and a tetrafluoroethylene/perfluoro(alkyl vinyl ether) copolymer.

13. The coated article according to any one of claims 7 to 12, wherein the fluorine-containing polymer (d) is at least one selected from the group consisting of a tetrafluoroethylene homopolymer, a modified polytetrafluoroethylene, a tetrafluoroethylene/hexafluoropropylene copolymer, and a tetrafluoroethylene/perfluoro(alkyl vinyl ether) copolymer.

14. The coated article according to any one of claims 7 to 13,
wherein the primer layer (A) has a thickness of 5 to 90 µm,
the fluorine-containing layer (B) has a thickness of 5 to 30 µm, and
the fluorine-containing layer (C) has a thickness of 10 to 90 µm,
wherein the thicknesses are measured by a high-frequency thickness gauge.

## Patentansprüche

1. Beschichtungszusammensetzung in einem Pulverzustand für Kochutensilien oder Küchenutensilien, umfassend:
ein aromatisches Polyetherketonharz; und
mindestens ein wärmebeständiges Harz, ausgewählt aus der Gruppe, bestehend aus einem Harz auf Polyamidbasis und einem Harz auf Polyimidbasis,
wobei das aromatische Polyetherketonharz und das wärmebeständige Harz ein Massenverhältnis (aromatisches Polyetherketonharz/wärmebeständiges Harz) von 1/99 bis 50/50 ergeben,
wobei die Beschichtungszusammensetzung zum direkten Aufbringen auf ein Substrat, das ein Metall oder ein nichtmetallisches anorganisches Material enthält, bestimmt ist.

2. Beschichtungszusammensetzung in einem flüssigen Zustand für Kochutensilien oder Küchenutensilien, umfassend:
ein aromatisches Polyetherketonharz;
mindestens ein wärmebeständiges Harz, ausgewählt aus der Gruppe, bestehend aus einem Harz auf Polyamidbasis und einem Harz auf Polyimidbasis; und
ein flüssiges Medium, das Wasser enthält,
wobei das aromatische Polyetherketonharz und das wärmebeständige Harz ein Massenverhältnis (aromatisches Polyetherketonharz/wärmebeständiges Harz) von 1/99 bis 50/50 ergeben,
wobei die Beschichtungszusammensetzung zum direkten Aufbringen auf ein Substrat, das ein Metall oder ein nichtmetallisches anorganisches Material enthält, bestimmt ist,
wobei der Anteil von Wasser in dem flüssigen Medium 50 bis 100 Massen-% beträgt,
wobei die Beschichtungszusammensetzung im Wesentlichen kein fluorhaltiges Polymer enthält, d. h. dass die Menge des fluorhaltigen Polymers bzw. der fluorhaltigen Polymere 5,0 Massen-% oder weniger, bezogen auf die Summe der Mengen des aromatischen Polyetherketonharzes und des wärmebeständigen Harzes, beträgt.

3. Beschichtungszusammensetzung nach Anspruch 1 oder 2,
wobei das aromatische Polyetherketonharz in einer Menge von 0,5 bis 15 Massenteilen, bezogen auf 100 Massenteile der Beschichtungszusammensetzung, vorliegt.

4. Beschichtungszusammensetzung nach einem der Ansprüche 1 und 3, die im Wesentlichen kein fluorhaltiges Polymer enthält, d. h. dass die Menge des fluorhaltigen Polymers bzw. der fluorhaltigen Polymere 5,0 Massen-% oder weniger, bezogen auf die Summe der Mengen des aromatischen Polyetherketonharzes und des wärmebeständigen Harzes, beträgt.

5. Beschichtungszusammensetzung nach einem der Ansprüche 1 bis 4, wobei es sich bei dem aromatischen Polyetherketonharz um mindestens eines, ausgewählt aus der Gruppe, bestehend aus einem Polyetherketonharz, einem Polyetheretherketonharz, einem Polyetherketonketonharz, einem Polyetheretherketonharz und einem Polyetherketonesterharz, handelt.

6. Beschichtungszusammensetzung nach einem der Ansprüche 1 bis 5, wobei es sich bei dem wärmebeständigen Harz um mindestens eines, ausgewählt aus der Gruppe, bestehend aus einem Polyamidharz, einem Polyamidimidharz und einem Polyimidharz, handelt.

7. Beschichteter Artikel für Kochutensilien oder Küchenutensilien, umfassend:
ein Substrat;
eine Grundierungsschicht (A), die ein aromatisches Polyetherketonharz und mindestens ein wärmebeständiges Harz (a), ausgewählt aus der Gruppe, bestehend aus einem Harz auf Polyamidbasis und einem Harz auf Polyimidbasis, enthält;
eine fluorhaltige Schicht (B), die ein fluorhaltiges Polymer (b) und ein wärmebeständiges Harz (c) enthält; und
eine fluorhaltige Schicht (C), die ein fluorhaltiges Polymer (d) enthält,
wobei das aromatische Polyetherketonharz und das wärmebeständige Harz (a) ein Massenverhältnis (aromatisches Polyetherketonharz/wärmebeständiges Harz (a)) von 1/99 bis 50/50 ergeben,
wobei es sich bei dem wärmebeständigen Harz (c) um mindestens eines, ausgewählt aus der Gruppe, bestehend aus einem Polyamidimidharz, einem Polyimidharz, einem Polyethersulfonharz, einem Polyetherimidharz, einem aromatischen Polyetherketonharz, einem aromatischen Polyesterharz und einem Polyarylensulfidharz, handelt,
wobei das Substrat, die Grundierungsschicht (A), die fluorhaltige Schicht (B) und die fluorhaltige Schicht (C) in der angegebenen Reihenfolge gestapelt sind,
wobei die Grundierungsschicht (A) im Wesentlichen kein fluorhaltiges Polymer enthält, d. h. dass die Menge des fluorhaltigen Polymers bzw. der fluorhaltigen Polymere 5,0 Massen-% oder weniger, bezogen auf die Summe der Mengen des aromatischen Polyetherketonharzes und des wärmebeständigen Harzes, beträgt.

8. Beschichteter Artikel nach Anspruch 7,
wobei es sich bei dem aromatischen Polyetherketonharz in der Grundierungsschicht (A) um mindestens eines, ausgewählt aus der Gruppe, bestehend aus einem Polyetherketonharz, einem Polyetheretherketonharz, einem Polyetherketonketonharz, einem Polyetheretherketonharz und einem Polyetherketonesterharz, handelt.

9. Beschichteter Artikel nach Anspruch 7 oder 8,
wobei es sich bei dem wärmebeständigen Harz (a) um mindestens eines, ausgewählt aus der Gruppe, bestehend aus einem Polyamidharz, einem Polyamidimidharz und einem Polyimidharz, handelt.

10. Beschichteter Artikel nach einem der Ansprüche 7 bis 9,
wobei das wärmebeständige Harz (c) Polyethersulfonharz und mindestens eines, ausgewählt aus der Gruppe, bestehend aus einem Polyamidimidharz und einem Polyimidharz, enthält und
das Polyethersulfonharz in einer Menge von 65 bis 85 Massen-%, bezogen auf die Summe der Mengen des Polyethersulfonharzes, des Polyamidimidharzes und des Polyimidharzes, vorliegt.

11. Beschichteter Artikel nach einem der Ansprüche 7 bis 10,
wobei das wärmebeständige Harz (c) in einer Menge von 15 bis 50 Massen-%, bezogen auf die Summe der Feststoffgehalte des wärmebeständigen Harzes (c) und des fluorhaltigen Polymers (b), vorliegt.

12. Beschichteter Artikel nach einem der Ansprüche 7 bis 11,
wobei es sich bei dem fluorhaltigen Polymer (b) um mindestens eines, ausgewählt aus der Gruppe, bestehend aus einem Tetrafluorethylenhomopolymer, einem modifizierten Polytetrafluorethylen, einem Tetrafluorethylen/Hexafluorpropylen-Copolymer und einem Tetrafluorethylen/Perfluor(alkylvinylether)-Copolymer, handelt.

13. Beschichteter Artikel nach einem der Ansprüche 7 bis 12,
wobei es sich bei dem fluorhaltigen Polymer (d) um mindestens eines, ausgewählt aus der Gruppe, bestehend aus einem Tetrafluorethylenhomopolymer, einem modifizierten Polytetrafluorethylen, einem Tetrafluorethylen/Hexafluorpropylen-Copolymer und einem Tetrafluorethylen/Perfluor(alkylvinylether)-Copolymer, handelt.

14. Beschichteter Artikel nach einem der Ansprüche 7 bis 13,
wobei die Grundierungsschicht (A) eine Dicke von 5 bis 90 µm aufweist,
die fluorhaltige Schicht (B) eine Dicke von 5 bis 30 µm aufweist und
die fluorhaltige Schicht (C) eine Dicke von 10 bis 90 µm aufweist,
wobei die Dicken mit einem Hochfrequenzdickenmessgerät gemessen werden.

## Revendications

1. Composition de revêtement à l'état de poudre utilisée pour des ustensiles de cuisson ou des articles de cuisine, comprenant :
une résine polyéthercétone aromatique et
au moins une résine thermorésistante sélectionnée dans le groupe constitué d'une résine à base de polyamide et d'une résine à base de polyimide ;
la résine polyéthercétone aromatique et la résine thermorésistante donnant un rapport en masse (résine polyéthercétone aromatique/résine thermorésistante) de 1/99 à 50/50,
la composition de revêtement étant destinée à être appliquée directement sur un substrat contenant un métal ou un matériau inorganique non métallique.

2. Composition de revêtement à l'état liquide utilisée pour des ustensiles de cuisson ou des articles de cuisine, comprenant
une résine polyéthercétone aromatique ;
au moins une résine thermorésistante sélectionnée dans le groupe constitué d'une résine à base de polyamide et d'une résine à base de polyimide ; et
un milieu liquide contenant de l'eau,
la résine polyéthercétone aromatique et la résine thermorésistante donnant un rapport en masse (résine polyéthercétone aromatique/résine thermorésistante) de 1/99 à 50/50,
la composition de revêtement étant destinée à être appliquée directement sur un substrat contenant un métal ou un matériau inorganique non métallique, la teneur en eau dans le milieu liquide étant de 50 à 100 % en masse,
dans laquelle la composition de revêtement ne contient pratiquement pas de polymère fluoré, c'est-à-dire que la quantité de polymère(s) fluoré(s) est inférieure ou égale à 5,0 % en masse par rapport à la somme des quantités de résine polyéthercétone aromatique et de résine thermorésistante.

3. Composition de revêtement selon la revendication 1 ou 2,
dans laquelle la résine polyéthercétone aromatique est présente à raison de 0,5 à 15 parties en masse sur 100 parties en masse de la composition de revêtement.

4. Composition de revêtement selon l'une quelconque des revendications 1 et 3, ne contenant pratiquement pas de polymère fluoré, c'est-à-dire que la quantité de polymère(s) fluoré(s) est inférieure ou égale à 5,0 % en masse par rapport à la somme des quantités de résine polyéthercétone aromatique et de résine thermorésistante.

5. Composition de revêtement selon l'une des revendications 1 à 4,
dans laquelle la résine polyéthercétone aromatique est au moins une résine sélectionnée dans le groupe constitué d'une résine polyéthercétone, d'une résine polyéther éther cétone, d'une résine polyéther cétone cétone, d'une résine polyéther éther cétone cétone et d'une résine polyéther cétone ester.

6. Composition de revêtement selon l'une des revendications 1 à 5,
dans laquelle la résine thermorésistante est au moins une résine sélectionnée dans le groupe constitué d'une résine polyamide, d'une résine polyamide-imide et d'une résine polyimide.

7. Article revêtu pour ustensiles de cuisson ou articles de cuisine, comprenant :
un substrat ;
une couche primaire (A) contenant une résine polyéthercétone aromatique et au moins une résine thermorésistante (a) sélectionnée dans le groupe constitué d'une résine à base de polyamide et d'une résine à base de polyimide ;
une couche fluorée (B) contenant un polymère fluoré (b) et une résine thermorésistante (c) ; et
une couche fluorée (C) contenant un polymère fluoré (d),
la résine polyéthercétone aromatique et la résine thermorésistante (a) donnant un rapport en masse (résine polyéthercétone aromatique/résine thermorésistante (a)) de 1/99 à 50/50,
la résine thermorésistante (c) étant au moins une résine sélectionnée dans le groupe constitué d'une résine polyamide-imide, d'une résine polyimide, d'une résine polyéthersulfone, d'une résine polyéther-imide, d'une résine polyéthercétone aromatique, d'une résine polyester aromatique et d'une résine sulfure de polyarylène,
le substrat, la couche primaire (A), la couche fluorée (B) et la couche fluorée (C) étant empilés dans l'ordre indiqué,
dans lequel la couche primaire (A) ne contient pratiquement pas de polymère fluoré, c'est-à-dire que la quantité de polymère(s) fluoré(s) est inférieure ou égale à 5,0 % en masse par rapport à la somme des quantités de résine polyéthercétone aromatique et de résine thermorésistante.

8. Article revêtu selon la revendication 7,
dans lequel la résine polyéther cétone aromatique de la couche primaire (A) est au moins une résine sélectionnée dans le groupe constitué d'une résine polyéthercétone, d'une résine polyéther éther cétone, d'une résine polyéther cétone cétone, d'une résine polyéther éther cétone cétone et d'une résine polyéther cétone ester.

9. Article revêtu selon la revendication 7 ou 8,
dans lequel la résine thermorésistante (a) est au moins une résine sélectionnée dans le groupe constitué d'une résine polyamide, d'une résine polyamide-imide et d'une résine polyimide.

10. Article revêtu selon l'une des revendications 7 à 9,
dans lequel la résine thermorésistante (c) contient une résine polyéthersulfone et au moins une résine sélectionnée dans le groupe constitué d'une résine polyamide-imide et d'une résine polyimide, et
la résine polyéthersulfone est présente en une quantité de 65 à 85 % en masse par rapport à la somme des quantités de résine polyéthersulfone, de résine polyamide-imide et de résine polyimide.

11. Article revêtu selon l'une des revendications 7 à 10, dans lequel la résine thermorésistante (c) est présente en une quantité de 15 à 50 % en masse par rapport à la somme des teneurs en solides de la résine thermorésistante (c) et du polymère fluoré (b).

12. Article revêtu selon l'une quelconque des revendications 7 à 11,
dans lequel le polymère fluoré (b) est au moins un polymère sélectionné dans le groupe constitué d'un homopolymère de tétrafluoroéthylène, d'un polytétrafluoroéthylène modifié, d'un copolymère de tétrafluoroéthylène/hexafluoropropylène et d'un copolymère de tétrafluoroéthylène/perfluoro (éther d'alkyle et de vinyle).

13. Article revêtu selon l'une quelconque des revendications 7 à 12,
dans lequel le polymère fluoré (d) est au moins un polymère sélectionné dans le groupe constitué d'un homopolymère de tétrafluoroéthylène, de polytétrafluoroéthylène modifié, d'un copolymère de tétrafluoroéthylène/hexafluoropropylène et d'un copolymère de tétrafluoroéthylène/perfluoro (éther d'alkyle et de vinyle).

14. Article revêtu selon l'une des revendications 7 à 13,
dans lequel la couche primaire (A) a une épaisseur de 5 à 90 µm,
la couche fluorée (B) a une épaisseur de 5 à 30 µm, et
la couche fluorée (C) a une épaisseur de 10 à 90 µm,
les épaisseurs sont mesurées par une jauge d'épaisseur à haute fréquence.
